# EUROPÄISCHE PATENTSCHRIFT

(11) **EP 3 609 730 B1**
(45) Veröffentlichungstag und Bekanntmachung des Hinweises auf die Patenterteilung: **01.07.2020**
(21) Anmeldenummer: 18709984.1
(22) Anmeldetag: 02.03.2018
(51) Int. Cl.: B60K 35/00, B60K 37/06, B60R 11/00

(54) **BEDIENVORRICHTUNG FÜR EIN KRAFTFAHRZEUG UND VERFAHREN ZUM BETREIBEN EINES KRAFTFAHRZEUGS MITTELS EINER BEDIENVORRICHTUNG**
OPERATING DEVICE FOR A MOTOR VEHICLE AND METHOD FOR OPERATING A MOTOR VEHICLE BY MEANS OF AN OPERATING DEVICE
DISPOSITIF DE COMMANDE POUR UN VÉHICULE AUTOMOBILE ET PROCÉDÉ PERMETTANT DE FAIRE FONCTIONNER UN VÉHICULE AUTOMOBILE AU MOYEN D'UN DISPOSITIF DE COMMANDE

(30) Priorität: 13.04.2017 DE 102017206414
(43) Veröffentlichungstag der Anmeldung: 19.02.2020
(73) Patentinhaber: Audi AG, 85045 Ingolstadt (DE)
(72) Erfinder: HEINZE, Martina, 85072 Eichstätt (DE)
(86) Internationale Anmeldenummer: PCT/EP2018/055126
(87) Internationale Veröffentlichungsnummer: WO 2018/188849

(56) Entgegenhaltungen:
- EP-A2- 3 064 987
- DE-A1-102013 110 864
- DE-A1-102014 006 338
- DE-A1-102015 010 662
- JP-A- 2012 052 977

## Beschreibung

Die Erfindung betrifft eine Bedienvorrichtung für ein Kraftfahrzeug und ein Verfahren zum Betreiben eines Kraftfahrzeugs mittels einer Bedienvorrichtung.

Heutzutage ist es technisch möglich, einen Autopiloten zum automatischen Fahren eines Kraftfahrzeugs zu nutzen. Dabei werden sowohl die Längsführung als auch die Querführung des Kraftfahrzeugs vollautomatisch gesteuert, sodass ein Fahrer überhaupt nicht mehr aktiv in die Steuerung des Kraftfahrzeugs eingreifen muss. Die DE 10 2014 003 023 A1 beschreibt z.B. die Nutzung eines Autopiloten in einem Kraftfahrzeug. Dabei ist es vorgesehen, dass eine Ablage des Kraftfahrzeugs in Form eines Cupholders oder eines Ablagetischs in eine ausgefahrene Gebrauchsposition verstellt werden kann, wenn ein Autopilot des Kraftfahrzeugs aktiviert wird. Bei deaktiviertem Autopilot wird eine Verstellung der Ablage in die Gebrauchsposition verhindert. Bei diesem Verfahren geht es vorrangig darum, dass ein Bewegungsradius des Fahrers durch die betreffende Ablage nicht unnötig eingeschränkt wird, solange der Fahrer das Kraftfahrzeug selbst steuern muss.

Darüber hinaus ist es auch bekannt, Touchscreens, also berührungssensitive Anzeigeeinrichtungen, zur Steuerung von unterschiedlichen Funktionen im Fahrzeuginnenraum bereitzustellen. Im Zusammenhang mit dem pilotierten Fahren, also bei aktivem Autopilot, ist es möglich, dass der Fahrer eine etwas bequemere Sitzposition, beispielsweise durch einen weiter zurückgestellten Sitz oder auch durch einen vom Lenkrad weggedrehten Sitz, einnehmen kann. Die DE 42 26 747 C1 beschreibt ein Verfahren, bei welchem ein Sitz eines Kraftfahrzeugs in eine von einem Lenkrad des Kraftfahrzeugs weggedrehte Position bewegt wird, wenn ein Autopilot des Kraftfahrzeugs aktiviert wird. Hier geht es darum, dass der Fahrer eine für ihn gegebenenfalls bequemere Sitzposition einnehmen kann, wenn er das Kraftfahrzeug gerade nicht selbst steuern muss.

Dabei wäre es wünschenswert, dass der Fahrer eine bei normaler Sitzposition, also bei nicht aktivem Autopilot, bequem erreichbare berührungssensitive Anzeigeeinrichtung ebenfalls auch noch bei einer z.B. etwas zurückgelehnten Sitzposition noch gut bedienen kann, welche er beim automatischen Fahrbetrieb des Kraftfahrzeugs einnimmt. Dies könnte beispielsweise durch eine verstellbare Mittelkonsole bewerkstelligt werden, sofern die berührungssensitive Anzeigeeinrichtung an der Mittelkonsole angebracht ist. Damit würden jedoch relativ hohe Kosten einhergehen, da die gesamte in der Mittelkonsole verbaute Elektronik mitgeführt werden müsste, wozu unter anderem auch entsprechende Kabellängen vorgehalten werden müssten. Zudem würde dadurch das Gewicht der gesamten Mittelkonsole steigen.

Des Weiteren wäre es auch an sich wünschenswert, wenn der Fahrer besonders einfach und deutlich darüber in Kenntnis gesetzt werden kann, ob das Kraftfahrzeug gerade in einem Autopilot-Modus oder in einem manuellen Fahrmodus betrieben wird. Die DE 10 2013 110 864 A1 beschreibt ein Verfahren, bei welchem eine Autopilotanzeige aus einer Aussparung eines Armaturenbretts eines Kraftfahrzeugs ausgefahren wird, sobald ein Autopilot des Kraftfahrzeugs aktiviert worden ist. Sobald der Autopilot wieder deaktiviert worden ist, wird die Autopilotanzeige wieder im Armaturenbrett versenkt. Die Aktivierung des Autopiloten kann durch Wegdrücken eines Lenkrads in Richtung des Armaturenbretts oder durch Betätigung einer bestimmen Taste erfolgen. In diesem Fall wird der Fahrer also durch das Aus- und Einfahren der Autopilotanzeige darüber in Kenntnis gesetzt, in welchem Fahrmodus das Kraftfahrzeug gerade betrieben wird.

Weiterer relevanter Stand der Technik ist aus der DE 10 2015 010662 A1 bekannt.

Es ist die Aufgabe der vorliegenden Erfindung, eine Bedienvorrichtung für ein Kraftfahrzeug sowie ein Verfahren zum Betreiben eines Kraftfahrzeugs bereitzustellen, mittels welchen zum einen eine besonders gute Bedienbarkeit des Kraftfahrzeugs sowohl bei einem manuellen als auch bei einem vollautomatischen Fahrbetrieb ermöglicht und zudem insbesondere ein Fahrer des Kraftfahrzeugs einfach und zuverlässig darüber in Kenntnis gesetzt werden kann, ob das Fahrzeug gerade im manuellen oder voll automatischen Fahrbetrieb betrieben wird.

Diese Aufgabe wird durch eine Bedienvorrichtung für ein Kraftfahrzeug sowie durch ein Verfahren zum Betreiben eines Kraftfahrzeugs mittels einer derartigen Bedienvorrichtung mit den Merkmalen der unabhängigen Patentansprüche gelöst. Vorteilhafte Ausgestaltungen mit zweckmäßigen und nicht trivialen Weiterbildungen der Erfindung sind den abhängigen Ansprüchen angegeben.

Die erfindungsgemäße Bedienvorrichtung für ein Kraftfahrzeug umfasst eine berührungssensitive Anzeigeeinrichtung sowie eine zwischen einer ersten Position und einer zweiten Position verstellbare Handauflage, welche im Bereich der Anzeigeeinrichtung angeordnet ist. Des Weiteren umfasst die erfindungsgemäße Bedienvorrichtung eine Steuereinrichtung, welche dazu eingerichtet ist, einen ersten Anzeigebereich der Anzeigeeinrichtung und einen manuellen Fahrmodus des Kraftfahrzeugs zu aktivieren, wenn die Handauflage in der ersten Position angeordnet ist. Zudem ist die Steuereinrichtung dazu eingerichtet, einen zweiten Anzeigebereich der Anzeigeeinrichtung und einen Autopilot des Kraftfahrzeugs zu aktivieren, wenn die Handauflage in der zweiten Position angeordnet ist.

Die Aktivierung und Deaktivierung des Autopiloten kann also bei der erfindungsgemäßen Bedienvorrichtung durch Verstellung der Handauflage bewirkt werden. Ein Fahrer des Kraftfahrzeugs muss die Handauflage einfach nur in die erste Position verstellen, um das Kraftfahrzeug im manuellen Fahrmodus zu betreiben, bei welchen der Fahrer das Kraftfahrzeug selbst steuern muss. Sobald sich die Handauflage in der ersten Position befindet, geht automatisch damit einher, dass die Steuereinrichtung den ersten Anzeigebereich der Anzeigeeinrichtung aktiviert. Vorzugsweise befindet sich die verstellbare Handauflage in der ersten Position näher am ersten Anzeigebereich als in der zweiten Position. Die Aktivierung des ersten Anzeigebereichs bedeutet, dass zum einen verschiedene Inhalte in diesem Anzeigebereich angezeigt werden können, und zum anderen, dass ein Benutzer, insbesondere der Fahrer des Kraftfahrzeugs, durch Berühren des ersten Anzeigebereich verschiedene Funktionen des Kraftfahrzeugs steuern kann.

Sobald die Handauflage in die zweite Position verstellt worden ist, aktiviert die Steuereinrichtung den zweiten Anzeigebereich der Anzeigeeinrichtung und den Autopiloten des Kraftfahrzeugs. Bei aktiviertem Autopilot übernimmt dieser sowohl die Längsführung als auch die Querführung des Kraftfahrzeugs, sodass der Fahrer überhaupt nicht mehr steuernd auf das Kraftfahrzeug einwirken muss. Der Fahrer kann dann beispielsweise seinen Sitz etwas zurückstellen oder auch die Lehnenneigung in eine etwas bequemere Position verbringen, da er weder das Lenkrad noch die Pedale des Kraftfahrzeugs bedienen muss. Mit der Aktivierung des Autopiloten geht automatisch einher, dass sie Steuereinrichtung den zweiten Anzeigebereich der Anzeigeeinrichtung aktiviert. Vorzugsweise ist die verstellbare Handauflage in der zweiten Position näher am zweiten Anzeigebereich als in der ersten Position angeordnet. Durch Aktivierung des zweiten Anzeigebereichs kann der Fahrer auch beispielsweise in einer etwas zurückgelehnten Sitzposition die berührungssensitive Anzeigeeinrichtung bequem erreichen und bedienen.

Die Handauflage kann zum Einnehmen der beiden Position beispielsweise verschiebbar und/oder verschwenkbar ausgebildet sein. Beispielsweise ist es möglich, dass die Handauflage in Fahrzeuglängsrichtung verschiebbar und/oder um eine in Fahrzeugquerrichtung verlaufende Achse verschwenkbar ist. Der Fahrer kann anhand der Stellung der Handauflage also jederzeit erkennen, welcher Fahrmodus des Kraftfahrzeugs gerade aktiviert ist. Darüber hinaus wird durch die entsprechende Aktivierung des ersten Anzeigebereichs und zweiten Anzeigebereichs in Abhängigkeit von der Stellung der Handauflage und somit auch in Abhängigkeit von dem gerade gewählten Fahrmodus die Bedienung der berührungssensitiven Anzeigeeinrichtung zu jedem Zeitpunkt auf bequeme Weise ermöglicht.

Mittels des erfindungsgemäßen Bedienvorrichtung wird die sogenannte Mode Awareness, also das Bewusstsein für den gerade gewählten Fahrmodus des Kraftfahrzeugs, durch eine physische Änderung im Fahrzeuginnenraum durch die verstellbare Handauflage verbessert. Darüber hinaus kann durch die entsprechende Aktivierung und Deaktivierung der jeweiligen Anzeigebereiche der Anzeigeeinrichtung in Abhängigkeit von der Stellung der Handauflage und somit in Abhängigkeit von dem gerade gewählten Modus des Kraftfahrzeugs ein mittels der berührungssensitiven Anzeigeeinrichtung bereitgestellter Bedienbereich erweitert und/oder zum Fahrer hin verschoben werden.

Eine vorteilhafte Ausführungsform der Erfindung sieht vor, dass die Handauflage in der ersten Position in Fahrzeuglängsrichtung weiter vorne als in der zweiten Position angeordnet ist, wobei der erste Anzeigebereich in Fahrzeuglängsrichtung weiter vorne als der zweite Anzeigebereich angeordnet ist. Ferner ist es auch möglich, dass die Handauflage in der ersten Position in Fahrzeughochrichtung weiter oben als in der zweiten Position angeordnet ist, wobei der erste Anzeigebereich in Fahrzeughochrichtung weiter oben als der zweite Anzeigebereich angeordnet ist. In der ersten Position der Handauflage kann ein Fahrer, der seine Hand auf der Handauflage abgelegt hat, den ersten Anzeigebereich besonders einfach erreichen und bedienen. In der zweiten Position der Handauflage kann der Fahrer, der seine Hand auf der Handauflage abgelegt hat, den zweiten Anzeigebereich besonders einfach erreichen und bedienen. Die Erreichbarkeit der verschiedenen Anzeigebereiche korrespondiert also mit der entsprechenden Stellung der Handauflage, was die Betätigung der berührungssensitiven Anzeigeeinrichtung jederzeit auf einfache Weise ermöglicht.

Eine weitere vorteilhafte Ausführungsform der Erfindung sieht vor, dass die Steuereinrichtung dazu eingerichtet ist, den ersten Anzeigebereich um den zweiten Anzeigebereich zu erweitern, wenn die Handauflage in der zweiten Position angeordnet ist. Wird also die Handauflage in die zweite Position verstellt, so wird der zuvor aktive erste Anzeigebereich weiterhin aktiv gehalten, wobei zusätzlich der zweite Anzeigebereich aktiviert wird. Wird die Handauflage danach wiederum von der zweiten Position in die erste Position zurück verstellt, so wird der zweite Anzeigebereich wiederum deaktiviert und der erste Anzeigebereich weiterhin aktiv gehalten. Bei dieser bevorzugten Ausführungsform der Erfindung bleibt der erste Anzeigebereich der Anzeigeeinrichtung also unabhängig von der Stellung der Handauflage immer aktiviert, wobei nur der zweite Anzeigebereich in Abhängigkeit von der Positionierung der verstellbaren Handauflage hinzugeschaltet oder weggeschaltet wird. Mit anderen Worten wird also der Bedienbereich der berührungssensitiven Anzeigeeinrichtung beim pilotierten Fahren, also wenn die Handauflage in der zweiten Position angeordnet und der Autopilot aktiviert ist, um den zweiten Anzeigebereich erweitert. Die insgesamt an der berührungssensitiven Anzeigeeinrichtung zur Verfügung stehende Anzeigefläche und somit auch zur Verfügung stehende Bedienfläche wird also während des vollpilotierten Fahrens des Kraftfahrzeugs vergrößert. Da der Fahrer bei aktiviertem Autopilot nicht steuernd ins Kraftfahrzeug eingreifen muss, können ihm noch zusätzliche weitere Inhalte mittels der berührungssensitiven Anzeigeeinrichtung angezeigt werden, welche er aus Sicherheitsgründen beim manuellen Fahrbetrieb nicht angezeigt bekommt. Darüber hinaus können aufgrund der Vergrößerung der Anzeige-und Bedienfläche der berührungssensitiven Anzeigeeinrichtung gegebenenfalls auch weitere Steuerfunktionen angeboten werden, welche beispielsweise Komfort-oder Infotainment-Funktionen des Kraftfahrzeugs betreffen, auf die der Fahrer aus Sicherheitsgründen während des manuellen Fahrens besser keinen Zugriff haben sollte.

Gemäß einer alternativen vorteilhaften Ausführungsform der Erfindung ist es vorgesehen, dass die Steuereinrichtung dazu eingerichtet ist, den ersten Anzeigebereich zu deaktivieren, wenn die Handauflage in der zweiten Position angeordnet ist. In diesem Fall wird also der Anzeige- und Bedienbereich der berührungssensitiven Anzeigeeinrichtung bei einem Wechsel vom manuellen in den autonomen Fahrbetrieb des Kraftfahrzeugs verschoben. Der während des manuellen Fahrmodus noch aktive erste Anzeigebereich wird deaktiviert und der zweite Anzeigebereich der Anzeigeeinrichtung wird aktiviert. Wird die Handauflage von der zweiten Position wieder in die erste Position verschoben, so wird in dem Fall der zweite Anzeigebereich wiederum deaktiviert und der erste Anzeigebereich aktiviert. Das kann insbesondere dann sinnvoll sein, wenn die erste Position und die zweite Position der verstellbaren Handauflage relativ weit entfernt voneinander angeordnet sind. In dem Fall kann ausreichen, den zweiten Anzeigebereich während des pilotierten Fahrens zu aktivieren, da der Fahrer bei auf der Handauflage abgelegter Hand nur den zweiten Anzeigebereich bequem erreichen kann. Fahrzeugseitig bzw. bedienvorrichtungsseitig kann auch eine Auswahlmöglichkeit bereitgestellt werden, über die der Fahrer auswählen kann, ob er das Hinzuschalten des zweiten Anzeigebereichs oder das Abschalten des ersten Anzeigebereichs und das Aktivieren des zweiten Anzeigebereichs während des pilotierten Fahrens wünscht.

In weiterer vorteilhafter Ausgestaltung der Erfindung ist es vorgesehen, dass an der Handauflage seitlich jeweilige Stege angeordnet sind, die um eine in Fahrzeugquerrichtung verlaufende Achse fahrzeugseitig, insbesondere an einer Mittelkonsole des Kraftfahrzeugs, gelagert sind. Dadurch kann die Handauflage auf besonders einfache und kostengünstige Weise fahrzeugseitig gelagert werden. Dadurch, dass die Handauflage unter Vermittlung der Stege fahrzeugseitig verschwenkbar gehalten ist, kann diese ganz einfach zwischen der ersten Position und zweiten Position verstellt werden.

Eine weitere vorteilhafte Ausführungsform der Erfindung sieht vor, dass die Handauflage um eine weitere in Fahrzeugquerrichtung verlaufende Achse verschwenkbar an den Stegen gelagert ist. Beispielsweise kann ein jeweiliges oberes Ende der Stege verschwenkbar seitlich an der Handauflage befestigt sein, wobei ein jeweiliges unteres Ende der Stege verschwenkbar fahrzeugseitig gelagert ist. Dadurch ist es möglich, dass eine Auflagefläche der Handauflage unabhängig von der Stellung der Handauflage in ergonomisch günstiger Weise zum Beispiel immer nach oben ausgerichtet ist, sodass ein Fahrzeuginsasse seine Hand jederzeit bequem auf der Auflagefläche der Handauflage abstützen bzw. ablegen kann.

Gemäß einer weiteren vorteilhaften Ausführungsform der Erfindung ist es vorgesehen, dass nur durch eine Betätigung einer an der Handauflage vorgesehenen Entriegelungstaste die Handauflage von der ersten in die zweite Position und/oder von der zweiten in die erste Position verstellbar ist. Die Entriegelungstaste kann beispielsweise an einer Unterseite der Handauflage angeordnet sein, sodass die Entriegelungstaste bei auf der Handauflage abgelegter Hand ganz einfach betätigt werden kann. Der Fahrer muss also die Verriegelungstaste betätigen, damit die Bewegung der verstellbaren Handauflage von der ersten in die zweite Position und/oder von der zweiten in die erste Position überhaupt freigegeben wird. Dadurch kann verhindert werden, dass der Fahrer versehentlich die Handauflage zwischen den beiden Positionen verstellt und dadurch unbeabsichtigt zwischen dem automatischen und manuellen Fahrbetrieb des Kraftfahrzeugs hin und her wechselt.

In weiterer vorteilhafter Ausgestaltung der Erfindung ist es vorgesehen, dass die Anzeigeeinrichtung schräg zu einer aus der Fahrzeuglängsrichtung und Fahrzeugquerrichtung aufgespannten Ebene angeordnet ist. Beim Aktivieren und Deaktivieren der jeweiligen Anzeigebereiche der berührungssensitiven Anzeigeeinrichtung abwandert also ein Mittelpunkt des aktiven Bereichs der berührungssensitiven Anzeigeeinrichtung sowohl nach oben und unten als auch nach vorne und nach hinten im Fahrzeuginnenraum. In dem Zusammenhang ist es vorzugsweise vorgesehen, dass die verstellte Bewegung der Handauflage zwischen ersten Position der zweiten Position entsprechend mit der Verschiebung des Mittelpunkte aktiven Bereichs der berührungssensitiven Anzeigeeinrichtung korrespondiert. Mit anderen Worten ist die Neigung der berührungssensitiven Anzeigeeinrichtung so gewählt, dass diese auf die Verstellbewegung der Handauflage abgestimmt ist. Dadurch kann sichergestellt werden, dass sowohl in der ersten also auch in der zweiten Position der verstellbaren Handauflage insbesondere der Fahrer des Kraftfahrzeugs die berührungssensitive Anzeigeeinrichtung durch entsprechende Hinzuschaltung und Wegschaltung der jeweiligen Anzeigebereiche jederzeit bequem betätigen kann.

Das erfindungsgemäßen Kraftfahrzeug umfasst die erfindungsgemäßen Bedienvorrichtung oder eine vorteilhafte Ausführungsform der erfindungsgemäßen Bedienvorrichtung.

Bei dem erfindungsgemäßen Verfahren zum Betreiben eines Kraftfahrzeugs mittels der erfindungsgemäßen Bedienvorrichtung oder mittels einer vorteilhaften Ausführungsform der erfindungsgemäßen Bedienvorrichtung wird der erste Anzeigebereich der Anzeigeeinrichtung und der manuelle Fahrmodus des Kraftfahrzeugs aktiviert, wenn die Handauflage in der ersten Position angeordnet ist. Der zweite Anzeigebereich der Anzeigeeinrichtung und der Autopilot des Kraftfahrzeugs wird aktiviert, wenn die Handauflage in der zweiten Position angeordnet ist. Vorteilhafte Ausgestaltungen der erfindungsgemäßen Bedienvorrichtung sind als vorteilhafte Ausgestaltungen des erfindungsgemäßen Verfahrens und umgekehrt anzusehen, wobei die Bedienvorrichtung insbesondere Mittel zur Durchführung der Verfahrensschritte aufweist.

Weitere Vorteile, Merkmale und Einzelheiten der Erfindung ergeben sich aus der nachfolgenden Beschreibung eines bevorzugten Ausführungsbeispiels sowie anhand der Zeichnung.

Die Zeichnung zeigt in:
- Fig. 1: eine schematische Darstellung eines Kraftfahrzeugs mit einer Bedienvorrichtung, welche eine berührungssensitive Anzeigeeinrichtung sowie eine zwischen einer ersten und zweiten Position verstellbaren Handauflage aufweist, die im Bereich der Anzeigeeinrichtung angeordnet ist, wobei die Bedienungsvorrichtung eine Steuereinrichtung zum Steuern der Anzeigeeinrichtung sowie zum Aktivieren und Deaktivieren eines Autopiloten des Kraftfahrzeugs aufweist;
- Fig. 2: eine Perspektivansicht, in welcher die verstellbare Handauflage und die berührungssensitive Anzeigeeinrichtung dargestellt sind;
- Fig. 3: eine schematische Draufsicht auf die verstellbare Handauflage und berührungssensitive Anzeigeeinrichtung, wobei die verstellbare Handauflage in derselben Position wie in Fig. 2 angeordnet ist;
- Fig. 4: eine weitere Perspektivansicht, in welcher die verstellbare Handauflage und die berührungssensitive Anzeigeeinrichtung dargestellt sind, wobei die verstellbare Handauflage in einer anderen Position als in den Fig. 2 und 3 angeordnet ist;
- Fig. 5: eine weitere schematische Draufsicht auf die verstellbare Handauflage und berührungssensitive Anzeigeeinrichtung, wobei die verstellbare Handauflage in derselben Position wie in Fig. 4 angeordnet ist.

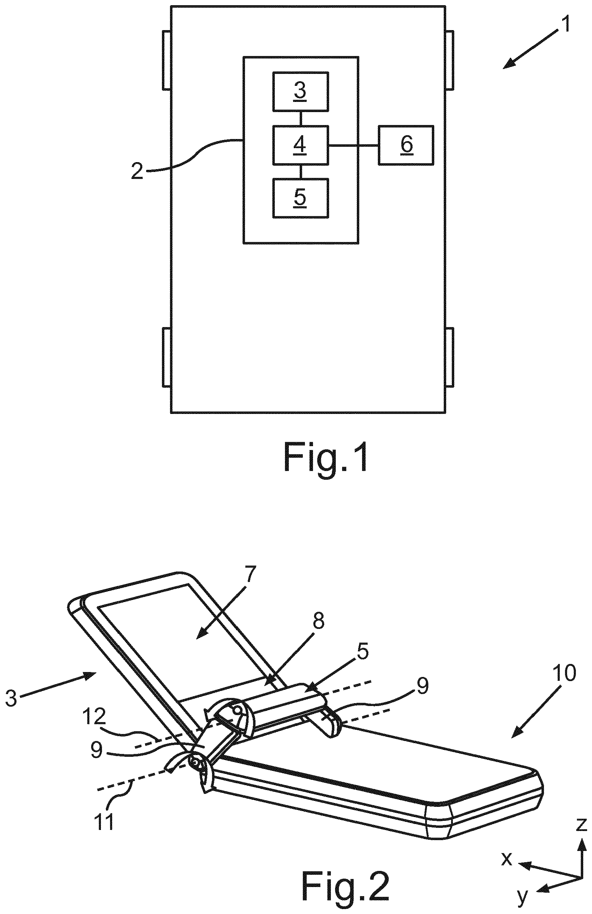

Ein Kraftfahrzeug 1 mit einer Bedienvorrichtung 2 ist einer schematischen Darstellung in Fig. 1 gezeigt. Die Bedienvorrichtung 2 umfasst eine berührungssensitive Anzeigeeinrichtung 3, eine Steuereinrichtung 4 und eine verstellbare Handauflage 5, die im Bereich der berührungssensitiven Anzeigeeinrichtung 3 angeordnet ist. Ferner ist noch ein Fahrerassistenzsystem 6 schematisch angedeutet, welches eine Autopilot-Funktion zum autonomen Steuern des Kraftfahrzeugs 1 bereitstellen kann.

In Fig. 2 sind die verstellbare Handauflage 5 und die berührungssensitive Anzeigeeinrichtung 3 in einer Perspektivansicht gezeigt. Die Handauflage 5 ist vorliegend in einer ersten Position angeordnet, welche bewirkt, dass sie Steuereinrichtung 4 das Fahrerassistenzsystem 6 deaktiviert und dadurch das Kraftfahrzeug 1 in einem manuellen Fahrmodus betrieben wird, bei welchem ein Fahrer des Kraftfahrzeugs 1 das Kraftfahrzeug 1 vollständig manuell steuern muss.

Sobald die Handauflage 5 in der hier gezeigten ersten Position angeordnet ist, bewirkt die Steuereinrichtung 4 zudem, dass ein erster Anzeigebereich 7 der berührungssensitiven Anzeigeeinrichtung 3 aktiviert ist. Des Weiteren weist die berührungssensitive Anzeigeeinrichtung 3 noch einen zweiten Anzeigebereich 8 auf, welcher unmittelbar an den ersten Anzeigebereich 7 angrenzt. Die beiden Anzeigebereichen 7, 8 bilden zusammen also die insgesamt zur Verfügung stehende Anzeige- und Bedienfläche der berührungssensitiven Anzeigeeinrichtung 3.

Die Handauflage 5 ist über jeweilige seitlich an dieser angebrachte Stege 9 verschwenkbar an einer schematisch angedeuteten Mittelkonsole 10 des Kraftfahrzeugs 1 gelagert. Jeweilige unteren Enden der Stege 9 sind um eine in Fahrzeugquerrichtung y verlaufende Achse 11 verschwenkbar an der Mittelkonsole 10 gelagert. Die Handauflage 5 selbst ist wiederum gelenkig an jeweiligen oberen Enden der Stege 9 gelagert, sodass sie Handauflage 5 relativ zu den Stegen 9 um eine weitere Achse 12, welche ebenfalls in Fahrzeugquerrichtung y verläuft, verschwenkt werden kann. Dadurch ist es möglich, dass eine nicht näher bezeichnete, nach oben weisende Auflageflächige der Handauflage 5 unabhängig von der Stellung der Handauflage 5 immer nach oben zeigen kann, sodass der Fahrer des Kraftfahrzeugs 1 seine Hand immer bequem auf der Handauflage 5 ablegen kann.

Wie zu erkennen, ist die berührungssensitive Anzeigeeinrichtung 3 schräg angestellt. Beide Anzeigebereiche 7, 8 sind also schräg zu einer aus der Fahrzeuglängsrichtung x und Fahrzeugquerrichtung y aufgespannten Ebene ausgerichtet. Des Weiteren ist der erste Anzeigebereich 7 in Fahrzeughochrichtung z weiter oben als der zweite Anzeigebereich 8 angeordnet.

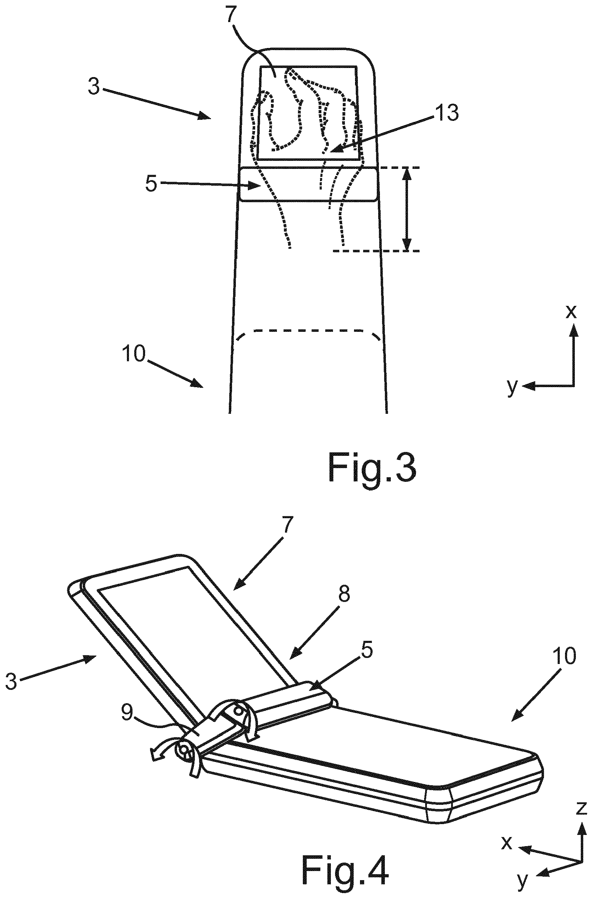

In Fig. 3 sind die berührungssensitive Anzeigeeinrichtung 3 und die Handauflage 5 in einer schematischen Draufsicht gezeigt, wobei die Handauflage 5 wiederum wie in Fig. 2 in der ersten Position angeordnet ist. Eine auf der Handauflage 5 abgelegte Hand 13 des Fahrers des Kraftfahrzeugs 1 ist zudem schematisch angedeutet. Wie zu erkennen, kann der Fahrer mit seiner Hand 13 den ersten Anzeigebereich 7 bequem bedienen, wenn die Handauflage 5 in der ersten Position angeordnet ist.

In Fig. 4 sind die berührungssensitive Anzeigeeinrichtung 3 und die Handauflage 5 in einer weiteren Perspektivansicht gezeigt, wobei die Handauflage 5 nun in einer zweiten Position angeordnet ist. Sobald die Handauflage 5 in diese zweite Position verstellt worden ist, aktiviert die Steuereinrichtung 4 das Fahrerassistenzsystem 6, infolgedessen der Autopilot des Kraftfahrzeugs 1 aktiviert wird. Zudem schaltet die Steuereinrichtung 4 den zweiten Anzeigebereich 8 der Anzeigeeinrichtung 3 noch zusätzlich zum ersten Anzeigebereich 7 hinzu. Der Anzeige- und Bedienbereich der berührungssensitiven Anzeigeeinrichtung 3 wird also erweitert, sobald die Handauflage 5 in die hier gezeigte zweite Position verstellt worden ist. Bei aktiviertem Autopilot hat Fahrer des Kraftfahrzeugs 1 also durch die Hinzuschaltung des zweiten Anzeigebereichs 8 einen größeren Anzeige- und Bedienbereich zur Verfügung als wenn das Kraftfahrzeug 1 im manuellen Modus betrieben wird.

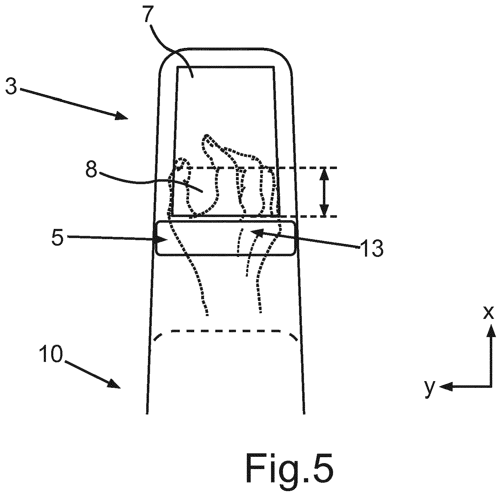

In Fig. 5 sind die verstellbare Handauflage 5 und die berührungssensitive Anzeigeeinrichtung 3 in einer weiteren schematischen Draufsicht gezeigt, wobei die Handauflage 5 wie in Fig. 4 in der zweiten Position angeordnet ist. Wie zu erkennen, überragt die Handauflage 5 in der zweiten Position den zweiten Anzeigebereich 8 von oben gesehen nicht mehr. Durch das Zurückschwenken der Handauflage 5 in die zweite Position kann der Fahrer mit seiner Hand 13 den zusätzlich aktivierten zweiten Anzeigebereich 8 nun ebenfalls bequem bedienen.

An einer Unterseite der Handauflage 5 kann eine in den Figuren nicht dargestellte Entriegelungstaste vorgesehen sein. Diese Entriegelungstaste muss betätigt werden, damit die Handauflage 5 zwischen der ersten und zweiten Position verstellt werden kann. Dadurch kann sichergestellt werden, dass der Fahrer nicht versehentlich die Handauflage 5 verschiebt und von einem manuellen Fahrbetrieb des Kraftfahrzeugs 1 in den automatischen Fahrbetrieb wechselt und umgekehrt.

Dadurch, dass der jeweilige Fahrmodus des Kraftfahrzeugs 1, also der manuelle Fahrbetrieb oder der Autopilot-Betrieb, von der Stellung der Handauflage 5 abhängt, wird die Mode Awareness beim Fahrer für den jeweiligen Betriebsmodus des Kraftfahrzeugs 1 gesteigert. Durch das Hinzuschalten und Wegschalten des zweiten Anzeigebereichs 8 in Abhängigkeit von der Stellung der Handauflage 5 und somit in Abhängigkeit von dem Fahrmodus des Kraftfahrzeugs 1 kann zudem der Bedien- und Anzeigebereich der berührungssensitiven Anzeigeeinrichtung 3 auf besonders einfache Weise zum Fahrer hin verschoben werden.

## Patentansprüche

1. Bedienvorrichtung (2) für ein Kraftfahrzeug (1), mit einer berührungssensitiven Anzeigeeinrichtung (3) sowie einer zwischen einer ersten Position und einer zweiten Position verstellbaren Handauflage (5), welche im Bereich der Anzeigeeinrichtung (3) angeordnet ist, und mit einer Steuereinrichtung (4), welche dazu eingerichtet ist,
- einen ersten Anzeigebereich (7) der Anzeigeeinrichtung (3) und einen manuellen Fahrmodus des Kraftfahrzeugs (1) zu aktivieren, wenn die Handauflage (5) in der ersten Position angeordnet ist;
**gekennzeichnet dadurch, dass** die Steuereinrichtung dazu eingerichtet ist, einen zweiten Anzeigebereich (8) der Anzeigeeinrichtung (3) und einen Autopilot des Kraftfahrzeugs (1) zu aktivieren, wenn die Handauflage (5) in der zweiten Position angeordnet ist.

2. Bedienvorrichtung (2) nach Anspruch 1,
**dadurch gekennzeichnet, dass**
die Handauflage (5) in der ersten Position in Fahrzeuglängsrichtung (x) weiter vorne als in der zweiten Position angeordnet ist, wobei der erste Anzeigebereich (7) in Fahrzeuglängsrichtung (x) weiter vorne als der zweite Anzeigebereich angeordnet ist.

3. Bedienvorrichtung (2) nach Anspruch 1 oder 2,
**dadurch gekennzeichnet, dass**
die Steuereinrichtung (4) dazu eingerichtet ist, den ersten Anzeigebereich (7) um den zweiten Anzeigebereich (8) zu erweitern, wenn die Handauflage (5) in der zweiten Position angeordnet ist.

4. Bedienvorrichtung (2) nach Anspruch 1 oder 2,
**dadurch gekennzeichnet, dass**
die Steuereinrichtung (4) dazu eingerichtet ist, den ersten Anzeigebereich (7) zu deaktivieren, wenn die Handauflage (5) in der zweiten Position angeordnet ist.

5. Bedienvorrichtung (2) nach einem der vorhergehenden Ansprüche,
**dadurch gekennzeichnet, dass**
an der Handauflage (5) seitlich jeweilige Stege (9) angeordnet sind, die um eine in Fahrzeugquerrichtung (y) verlaufende Achse (11) fahrzeugseitig, insbesondere an einer Mittelkonsole (10) des Kraftfahrzeugs (1), gelagert sind

6. Bedienvorrichtung (2) nach Anspruch 5,
**dadurch gekennzeichnet, dass**
die Handauflage (5) um eine weitere in Fahrzeugquerrichtung (y) verlaufende Achse (12) verschwenkbar an den Stegen (9) gelagert ist

7. Bedienvorrichtung (2) nach einem der vorhergehenden Ansprüche,
**dadurch gekennzeichnet, dass**
nur durch eine Betätigung einer an der Handauflage (5) vorgesehenen Entriegelungstaste die Handauflage (5) von der ersten in die zweite Position und/oder von der zweiten in die erste Position verstellbar ist.

8. Bedienvorrichtung (2) nach einem der vorhergehenden Ansprüche,
**dadurch gekennzeichnet, dass**
die Anzeigeeinrichtung (3) schräg zu einer aus der Fahrzeuglängsrichtung (x) und Fahrzeugquerrichtung (y) aufgespannten Ebene angeordnet ist.

9. Kraftfahrzeug (1) mit einer Bedienvorrichtung (2) nach einem der vorhergehenden Ansprüche.

10. Verfahren zum Betreiben eines Kraftfahrzeugs (1) mittels einer Bedienvorrichtung (2) nach einem der Ansprüche 1 bis 8, bei welchem der erste Anzeigebereich (7) der Anzeigeeinrichtung (3) und der manuelle Fahrmodus des Kraftfahrzeugs (1) aktiviert wird, wenn die Handauflage (5) in der ersten Position angeordnet ist, und der zweite Anzeigebereich der Anzeigeeinrichtung (3) und der Autopilot des Kraftfahrzeugs (1) aktiviert wird, wenn die Handauflage (5) in der zweiten Position angeordnet ist.

## Claims

1. Operating device (2) for a motor vehicle (1), having a touch-sensitive display device (3) as well as a hand rest (5) that is adjustable between a first position and a second position, which is arranged in the region of the display device (3), and having a control device (4), which is configured to,
- activate a first display area (7) of the display device (3) and a manual driving mode of the motor vehicle (1) when the hand rest (5) is arranged in the first position, **characterised in that** the control device is configured to
- activate a second display area (8) of the display device (3) and an autopilot of the motor vehicle (1) when the hand rest (5) is arranged in the second position.

2. Operating device (2) according to claim 1,
**characterised in that**
the hand rest (5) is arranged further forward in the first position than in the second position in the vehicle's longitudinal direction (x), wherein the first display area (7) is arranged further forward than the second display area in the vehicle's longitudinal direction (x).

3. Operating device (2) according to claim 1 or 2,
**characterised in that**
the control device (4) is configured to expand the first display area (7) around the second display area (8) when the hand rest (5) is arranged in the second position.

4. Operating device (2) according to claim 1 or 2,
**characterised in that**
the control device (4) is configured to deactivate the first display area (7) when the hand rest (5) is arranged in the second position.

5. Operating device (2) according to any of the preceding claims,
**characterised in that**
lateral bars (9) are arranged on the hand rest (5), which are mounted around an axis (11) running in the vehicle's transverse direction (y) in the vehicle, in particular on a centre console (10) of the motor vehicle (1).

6. Operating device (2) according to claim 5,
**characterised in that**
the hand rest (5) is mounted pivotably on the bars (9) around a further axis (12) running in the vehicle's transverse direction (y).

7. Operating device (2) according to any of the preceding claims,
**characterised in that**
by simply by pressing a release button provided on the hand rest (5), the hand rest (5) can be adjusted from the first to the second position and/or from the second to the first position.

8. Operating device (2) according to any of the preceding claims,
**characterised in that**
the display device (3) is arranged at an angle to a plane defined by the vehicle's longitudinal direction (x) and the vehicle's transverse direction (y).

9. Motor vehicle (1) having an operating device (2) according to any of the preceding claims.

10. Method for operating a motor vehicle (1) by means of an operating device (2) according to any of claims 1 to 8, in which the first display area (7) of the display device (3) and the manual driving mode of the motor vehicle (1) are activated when the hand rest (5) is arranged in the first position, and the second display area of the display device (3) and the autopilot of the motor vehicle (1) are activated when the hand rest (5) is arranged in the second position.

## Revendications

1. Dispositif de contrôle (2) pour un véhicule automobile (1), avec un dispositif d'affichage (3) tactile ainsi qu'avec un repose-main (5), qui est déplaçable entre une première position et une deuxième position et qui est placé dans la zone du dispositif d'affichage (3), et avec un dispositif de commande (4) qui est conçu pour
- activer une première zone d'affichage (7) du dispositif d'affichage (3) et un mode de conduite manuel du véhicule automobile (1) si le repose-main (5) est placé dans la première position ;
**caractérisé en ce que** le dispositif de commande est conçu pour
- activer une deuxième zone d'affichage (8) du dispositif d'affichage (3) et un pilotage automatique du véhicule automobile (1) si le repose-main (5) est placé dans la deuxième position.

2. Dispositif de contrôle (2) selon la revendication 1, **caractérisé en ce que** le repose-main (5) dans la première position est placé plus avant dans la direction longitudinale (x) du véhicule que dans la deuxième position, dans lequel la première zone d'affichage (7) est placée plus avant dans la direction longitudinale (x) du véhicule que la deuxième zone d'affichage.

3. Dispositif de contrôle (2) selon la revendication 1 ou 2, **caractérisé en ce que** le dispositif de commande (4) est conçu pour élargir la première zone d'affichage (7) autour de la deuxième zone d'affichage (8) si le repose-main (5) est placé dans la deuxième position.

4. Dispositif de contrôle (2) selon la revendication 1 ou 2, **caractérisé en ce que** le dispositif de commande (4) est conçu pour désactiver la première zone d'affichage (7) si le repose-main (5) est placé dans la deuxième position.

5. Dispositif de contrôle (2) selon l'une quelconque des revendications précédentes, **caractérisé en ce qu'**au niveau du repose-main (5) sont placées latéralement des traverses (9) respectives qui sont logées côté véhicule autour d'un axe (11) s'étendant dans la direction transversale (y) du véhicule, en particulier au niveau d'une console centrale (10) du véhicule automobile (1).

6. Dispositif de contrôle (2) selon la revendication 5, **caractérisé en ce que** le repose-main (5) est logé au niveau des traverses (9) de manière à pouvoir pivoter autour d'un autre axe (12) s'étendant dans la direction transversale (y) du véhicule.

7. Dispositif de contrôle (2) selon l'une quelconque des revendications précédentes, **caractérisé en ce que** le repose-main (5) peut être déplacé de la première à la deuxième position et/ou de la deuxième à la première position seulement par un actionnement d'une touche de déverrouillage prévue au niveau du repose-main (5).

8. Dispositif de contrôle (2) selon l'une quelconque des revendications précédentes, **caractérisé en ce que** le dispositif d'affichage (3) est placé obliquement par rapport à un plan formé par la direction longitudinale (x) du véhicule et par la direction transversale (y) du véhicule.

9. Véhicule automobile (1) avec un dispositif de contrôle (2) selon l'une quelconque des revendications précédentes.

10. Procédé de fonctionnement d'un véhicule automobile (1) au moyen d'un dispositif de contrôle (2) selon l'une quelconque des revendications 1 à 8, selon lequel la première zone d'affichage (7) du dispositif d'affichage (3) et le mode de conduite manuel du véhicule automobile (1) sont activés si le repose-main (5) est placé dans la première position, et la deuxième zone d'affichage du dispositif d'affichage (3) et le pilotage automatique du véhicule automobile (1) sont activés si le repose-main (5) est placé dans la deuxième position.
